(19) **Europäisches Patentamt / European Patent Office / Office européen des brevets**

(11) **EP 1 231 589 B1**

(12) **EUROPEAN PATENT SPECIFICATION**

(45) Date of publication and mention
of the grant of the patent:
**19.08.2009 Bulletin 2009/34**

(51) Int Cl.:
*G09G 3/28* (2006.01)   *H04N 13/00* (2006.01)

(21) Application number: **01103185.3**

(22) Date of filing: **10.02.2001**

(54) **Stereoscopic plasma display**

Stereoskopische Plasmaanzeige

Appareil d'affichage stéréoscopique à plasma

(84) Designated Contracting States:
**DE ES FR GB IT**

(43) Date of publication of application:
**14.08.2002 Bulletin 2002/33**

(73) Proprietor: **Thomson Licensing**
**92100 Boulogne-Billancourt (FR)**

(72) Inventors:
• **Weitbruch, Sébastien**
**78087 Mönchweiler (DE)**
• **Correa, Carlos**
**78056 VS-Schwenningen (DE)**

• **Zwing, Rainer**
**78052 VS-Schwenningen (DE)**

(74) Representative: **Schäferjohann, Volker et al**
**Deutsche Thomson OHG**
**European Patent Operations**
**Karl-Wiechert-Allee 74**
**30625 Hannover (DE)**

(56) References cited:
**EP-A- 0 845 911**       **EP-A- 1 058 229**
**US-A- 5 654 749**       **US-A- 5 717 412**
**US-A- 5 870 137**

Printed by Jouve, 75001 PARIS (FR)

**Description**

The present invention relates to a method and device for processing stereoscopic video pictures. Particularly, the present invention relates to stereoscopic display of pictures on a plasma display panel (PDP).

Background

Plasma technology allows achieving flat displays with large size, very limited depth and without relevant viewing angle constraints. For these reasons, the PDPs are really suitable for use in stereoscopic vision. This display causes no geometric distortion in the displayed image and therefore enables a precise depth impression of stereoscopic images. In addition, the big size of such a display suits very well to a strong impression of volume.

Today, there is no doubt that many visual communications as well as home entertainment can be meaningfully enhanced by the addition of another dimension, namely depth. With the incoming of digital transmission (MPEGn, ...) combined with the evolutions of computing system as well as the lower cost of electronics, the generation, manipulation and transmission of 3D images is becoming a reality.

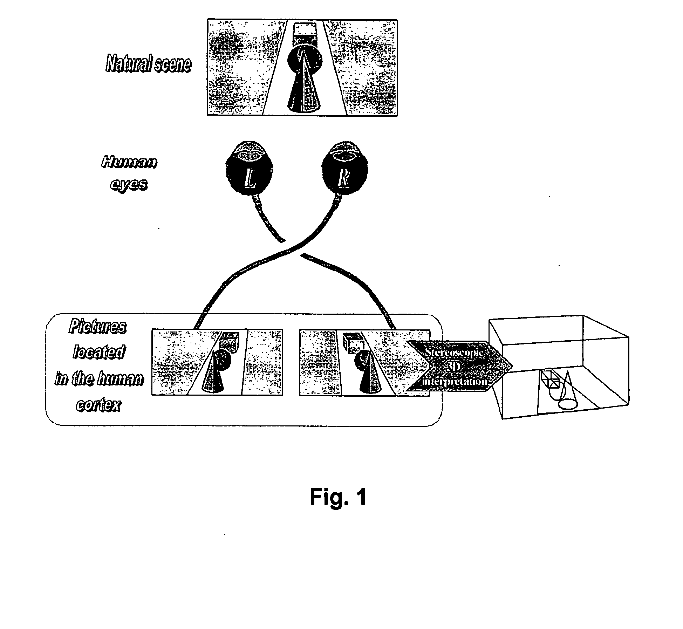

The 3D perception from the Human Visual System (HVS) is based on the close side-by-side positioning of the eyes. Each eye takes a view of the same area from a slightly different angle. These two separate images are sent to the brain for processing according to Fig. 1. When the two images arrive simultaneously in the back of the brain, they are united into one picture. The mind combines the two images by matching up the similarities and adding the small differences to catch finally a three-dimensional *stereo* picture. With stereo vision, the HVS sees an object as solid in three spatial dimensions (width, height and depth) and it is the added perception of the depth dimension that make stereo vision so rich and special. Moreover, a stereo picture will increase the impression of sharpness in the brain.

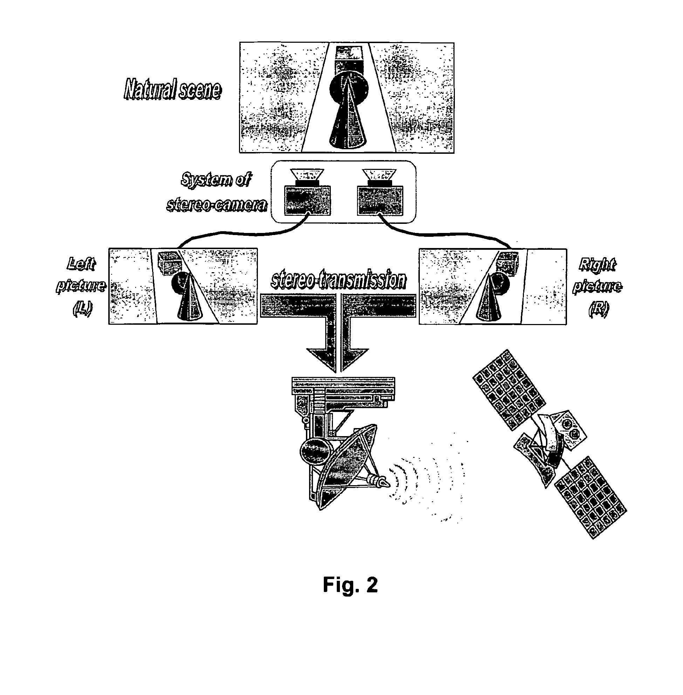

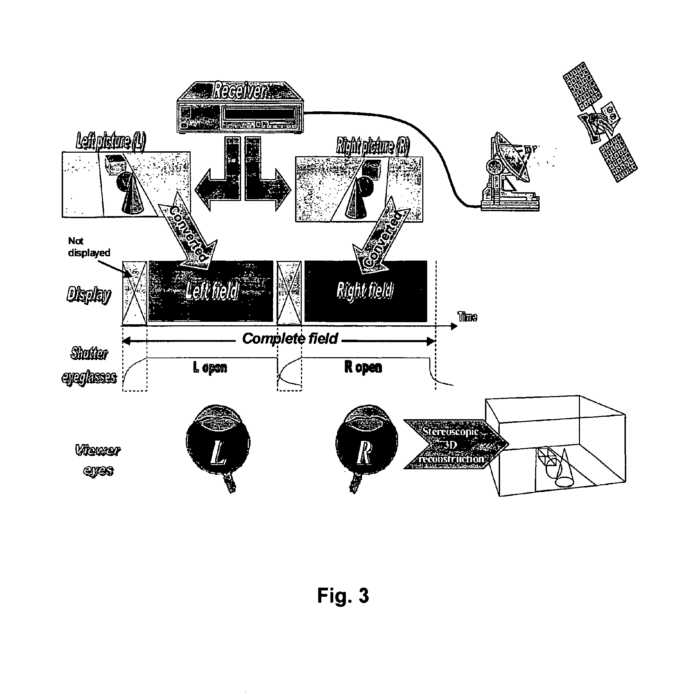

3D images are generated with the help of two video cameras positioned side-by-side in a similar way as the human eyes. Other methods mainly based on complex software are also able to generate artificial stereo pictures by ray tracing (simulation of light propagation). In the following these images are called, left and right images. The principle of stereoscopic broadcasting is based on the transmission of the both images. This global concept is shown on Fig 2. If right and left images are displayed sequentially from a source, and a synchronized shutter system in front of the eye allows the right image to only enter the right eye and the left image to only enter the left eye, then the stereo vision can be observed as shown in Fig. 3. The shutter can be mounted in glasses which are matched with a display in which two constituent pictures are presented in alternation instead of simultaneously. The glasses occlude one eye and then the other in synchronism with the image displaying. This method is often called "field sequential". This method avoids the retinal rivalry caused by anaglyph viewing (other method based on a two-color glasses associated with a two-color picture - each color related to one eye and resulting in a monochrome stereoscopic vision, very old method traced back to 1858). Nevertheless, this method can introduce other discomfort such as the introduction of time parallax between the two images, or the possibility of "ghosting" between the image due to phosphor persistence. Most glasses-shutter systems use LCDs which function with polarized light. Currently, glasses using LCDs can provide good switching speed and reasonable extinction of the alternative lenses.

The electro-optical polarizing shutter available on the market today transmit only 30% of the unpolarized input light (rather than 50% for perfect polarizers) and this reduces a lot the image brightness. Some eyeglass shutters are connected by wires to the monitor, others are controlled by infrared and are wireless.

The displaying of stereo pictures on a Plasma screen needs also the possibility to display two different pictures per frame which is a new challenge for this technology.

A PDP utilizes a matrix array of discharge cells which can only be "ON" or "OFF". Also unlike a CRT or LCD in which gray levels are expressed by analog control of the light emission, a PDP controls the gray level by modulating the number of light pulses per frame (sustain pulses). This time-modulation will be integrated by the eye over a period corresponding to the eye time response. To perform a grayscale rendition, the Plasma display is commonly divided in sub-lighting periods called sub-fields each one corresponding to a bit of the input video picture data. For instance, if 8 bit luminance levels are provided, in that case each level will be represented by a combination of the 8 following bits :
**1 - 2- 4 - 8 - 16 - 32 - 64 - 128**.

To realize such a coding with the PDP technology, the frame period will be divided in 8 lighting periods (called sub-fields), each one corresponding to a bit. The number of light pulses for the bit "2" is the double as for the bit "1", and so forth. With these 8 sub-periods, we are able through sub-field combination, to build the 256 gray levels.

A simple method to implement a stereoscopic displaying on a PDP is based on the separation of sub-fields into Left(L) and Right(R) groups which are synchronized with the open and close of the LCD shutter glasses. It is a further advantage of this method that with the same display 2D and 3D pictures can easily be generated by a simple change of the sub-field encoding process. There are 3D plasma displays available with appropriate front filters consisting of a plurality of lenses for directing the light of dedicated pixels to the different eyes where this is not the case.

Invention

For the following explanations, we will use the assumption that the PDP is able to display 18 sub-fields per frame in 60Hz mode (16.67 ms frame period). In addition we will also make the assumption that the temporal response of the shutter eyeglasses need the time of one addressing period. Obviously, all these values are only an example!

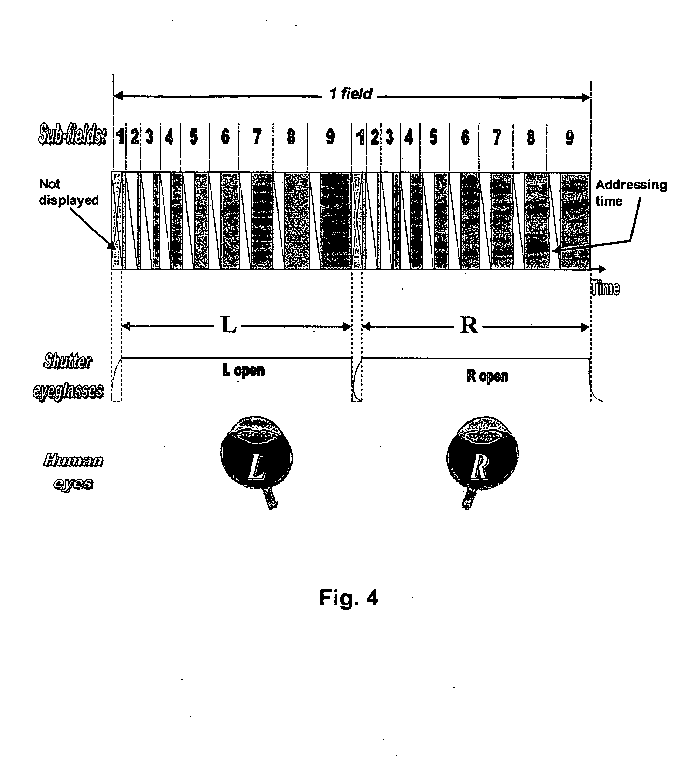

Figure 4 shows a light emission scheme which has eighteen sub-fields per frame in 60Hz mode (16.7 ms). Nine sub-fields are assigned to each of the left and right images, for example.

In case of the standard "sequential-field" method a big amount of luminance is lost. In the example of Fig. 4, each eye is only able to perceive the half of the PDP available sustains (light). In other words, if the global luminance of the picture in 2D displaying is 100 cd/m$^2$, the brain will only perceive 50cd/m$^2$ in case of 3D displaying. In addition, the electro-optical polarizing shutter eyeglasses available on the market today transmit only 30% of the unpolarized input light (rather than 50% for perfect polarizer). In any case, the shutter eyeglasses will introduce a further loss of light which will finally lead to a very dark 3D picture.

In view of the above it is the object of the present invention to provide a method and device for processing stereoscopic video-pictures, wherein the loss of luminance is reduced.

According to the present invention this object is solved by a method according to claim 1 and a device according to claim 4. Further, favourable developments are defined in the sub-claims.

The main idea of the present invention is that the displaying is based on three fields instead of two. With this measure there is much more flexibility for distributing light to the left and right eye. In one field there are sub-fields grouped together which are used for producing light pulses dedicated exclusively for the left eye. In another field there are sub-fields grouped together which are used for producing light pulses dedicated exclusively for the right eye. In a further field there are grouped together some sub-fields which are used for producing light pulses dedicated for both eyes in common.

This solution requires that the left and right eye opening periods overlap for the sub-field periods of the common field.

It is a great advantage of this method that more light pulses can be directed to both eyes due to the fact that the opening periods overlap.

For the picture elements, which have a great similarity in both pictures left and right, very often the full sub-fields of the common field can be used to produce some extra light beside the sub-field periods of the left and right fields. As most of the picture elements of a 3D picture will usually be seen by both eyes, they will have great similarities and the 3D pictures produced according to the invention can be much brighter than with the conventional method.

On the other hand, three pictures need to be encoded instead of two in the conventional method. Due to the fact, that the new proposal does not enhance the total number of sub-fields for a frame or field period, this could have an impact on the quality of the pictures. With a new kind of sub-field encoding algorithm called Bit-Eye-Repeat (BER) encoding which is a further aspect of the invention it is possible to maintain picture quality without the need of more sub-fields per frame period.

This algorithm starts from the original left and right input pictures and makes the calculation of the specific left and right picture and the common picture in a different way namely under consideration of which sub-fields are available for the common picture, and the specific left and right picture. The algorithm makes a sub-field encoding for a pair of corresponding pixels from the original left and right picture, simultaneously. First, it performs a standard encoding for the greater pixel and then it checks whether the found code word entries for the common sub-fields can also be used for the smaller pixel. If not, the coding of the smaller pixel determines the entries for the common sub-fields and the coding of the greater pixel is revised. By this it is assured that the coding errors due to the reduced number of sub-fields being available for a single one of the three pictures are reduced.

Drawings

Exemplary embodiments of the invention are illustrated in the drawings and are explained in more detail in the following description.

In the drawings:

Fig. 1 shows the principle of stereoscopic vision;

Fig. 2 shows the principle of broadcasting stereoscopic pictures;

Fig. 3 shows the principle of stereoscopic displaying with shutter eyeglasses;

Fig. 4 shows the conventional approach of stereoscopic displaying on a plasma display;

Fig. 5 shows the principle of stereo picture separation in three components;

Fig. 6 shows the principle of stereoscopic displaying on a plasma display based on the three components of Fig. 5;

Fig. 7 shows the inventive method of Bit-Eye-Repeat displaying;

Fig. 8 shows the principle of sub-fields interleaving;

Fig. 9 shows a circuit implementation of a 3D Plasma display with picture separation; and

Fig. 10 shows the principle of a circuit implementation of a 3D Plasma display with Bit-Eye-Repeat encoding.

Exemplary Embodiments

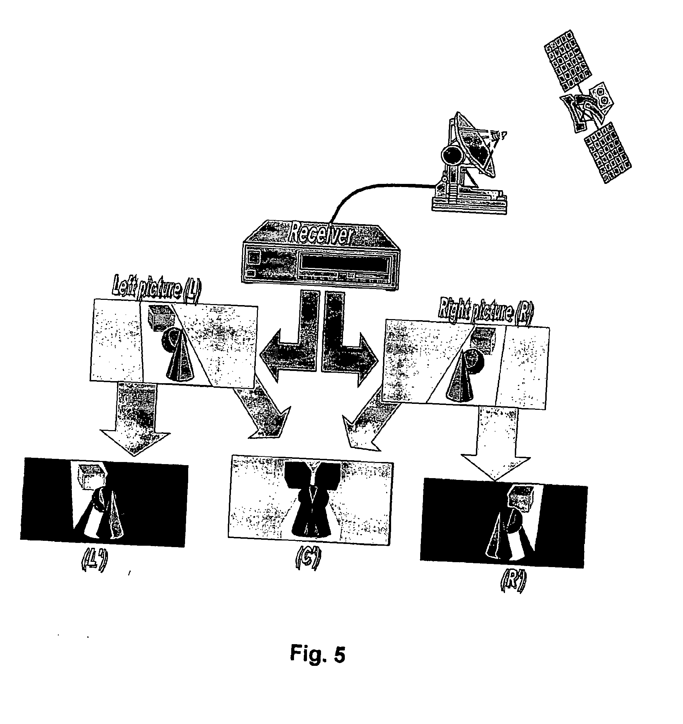

Preferred embodiments of the present invention will be explained along with figures 5 to 10.

The basic idea behind this concept is a displaying based on three fields instead of two. One for the picture commonly seen by the two eyes (no loss of energy), one specific to the right eye and one specific to the left eye, the final picture on the eye retina staying the same to ensure a good stereo perception. This concept is based on the fact that the two original pictures are two views from the same scene also have a lot of similarities.

The set of pictures Right (R) and Left (L) will be converted in three pictures: specific right R', specific left L' and C' which is the common one. This conversion will be made as following:

**For each pixel of the screen:**

$C' = f(R, L)$, i.e. a function of the video values R and L and particularly the minimum thereof. Further it is defined:

$$R' = R - C'$$
$$L' = L - C'$$

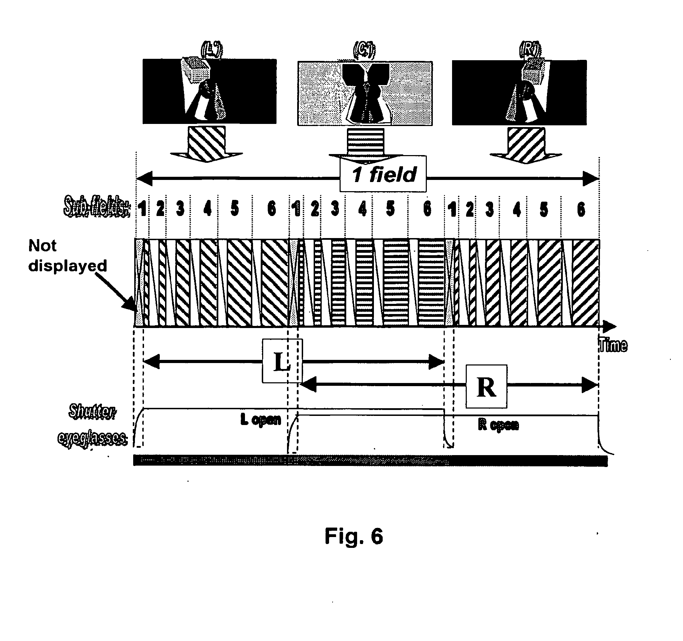

Afterwards, these three pictures will be encoded separately in sub-fields. Obviously, the total number of sub-fields stays the same but less sub-fields are needed for the displaying of the specific right R' and left pictures L' since the absolute values are lowered by the common picture part. The principle is illustrated in Fig. 5 and 6:

Fig. 5 shows the separation of the two original stereo-pictures L and R in three pictures L',C',R' which will be encoded separately and displayed. Fig. 6 shows an example based on the displaying of the three pictures R', L' and C' in three packages of six sub-fields. In that case, the shutter for the left eye is open for the first to twelfths sub-field and the shutter for the right eye is open for the sevenths to the eighteenths sub-field. So there is a common opening period during the sevenths to twelfths sub-field. As a result the left eye will see a combination of the pictures L' and C' and the right eye will see a combination of the pictures C' and R'.

At the beginning, the assumption was made that 18 sub-fields were available in total.

In the example of Fig.6 with pure picture separation, three pictures instead of two have to be encoded with the same number of sub-fields. For some video contents this can have an impact on the picture quality, e.g.

if there are great differences between the left and right pictures L and R so that there are more sub-fields required for the coding of the specific left and right pictures L', R'.

In this case, this way of picture displaying can be further improved with the help of a Bit-Eye-Repeat method described in the following paragraphs.

First, the concept of (BLR) Bit-Line-Repeat encoding will be explained which is used for 2D picture displaying. In this concept, e.g. described in EP-A-1058229, some sub-fields will be duplicated on $n$ consecutive lines. These sub-fields are called common sub-fields since they are common to different lines in the vertical direction. The other sub-fields are called specific sub-fields since they will be specific to each pixel. The video signal will be specially encoded to reduce the loss of vertical resolution.

In the case of the stereo-pictures, the two pictures L and R have a lot of similarities. Thus, a similar concept can be implemented here. For two pixels located at the same position but in different pictures L and R some sub-fields will be defined to be common sub-fields and the others will be specific sub-fields. The pixels are encoded with the same code on the common sub-fields (similarity) and coding differences are allowed only in the specific sub-fields. Since the two pictures are related to the right and left eye, this principle is called Bit-Eye-Repeat.

This concept can be utilized in the conventional stereoscopic plasma-displaying concept with two fields for the stereoscopic picture as well as with the basic idea of the use of three fields for the stereoscopic picture with three groups of sub-fields. The principle will be explained with the last stereoscopic displaying concept:

➢ Specific sub-fields for the right eye: $SF_{R'}$
➢ Specific sub-fields for the left eye: $SF_{L'}$
➢ Common sub-fields for both eyes: $SF_{C'}$

In order to avoid coding errors for identical pixels in both pictures, it is advantageous that the weights $SF_{R'}$ and $SF_{L'}$ are the same. Of course, the pixels could be different and this means that their encoding needs to be made separately. The maximal difference available between the two pixels is given by the specific sub-fields only and is called $SPE_{max}$. Obviously, some errors have to be made during the encoding since there is a lack of flexibility in the encoding itself.

An example of such a coding based on 18 basic sub-fields is given to simplify the exposition:

➢ Specific sub-field weights for the right eye: 5 - 10 - 20 - 40 - 50 - 70 ($\Sigma$ = 195)
➢ Specific sub-field weights for the left eye: 5 - 10 - 20 - 40 - 50 - 70 ($\Sigma$ = 195)
➢ Common sub-field weights for both eyes: <u>1</u> - <u>2</u> - <u>4</u> - <u>8</u> - <u>15</u> - <u>30</u> ($\Sigma$ = 60).

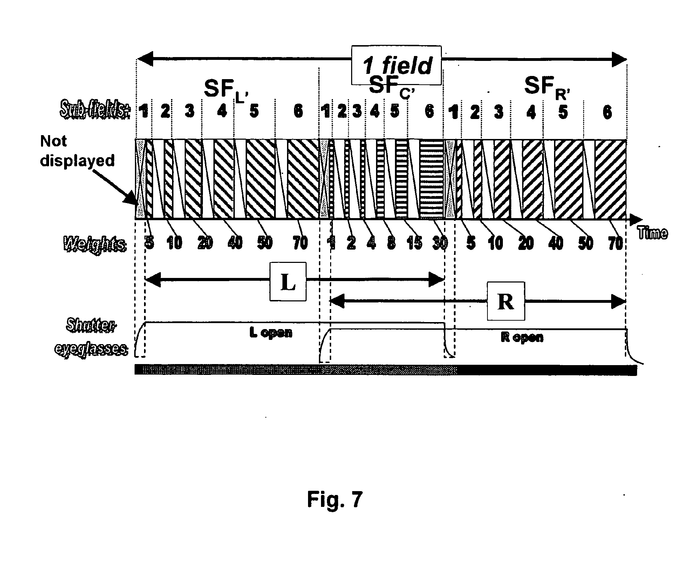

The way to define such a code is based first, on a standard code for the common sub-fields (underlined weights) enabling the encoding on all the common values. For the specific values, a first odd weight (basic value B) has to be chosen which will represent the tolerance in the encoding of two near video values (maximal error). In the example this value is 5 (tolerance is 2). Afterwards, the other weights are chosen in order to be able to code all multiples of the basic value up to the maximum value, i.e. sum value. The displaying of such a code is shown Fig. 7; and, furthermore, Fig. 7 shows the behaviour of the shutter glasses in case of BER which are totally open during the displaying of the common sub-fields. These sub-fields have also a better luminance on the human retina than the two groups of specific sub-fields.

The following is an overall presentation of the steps of the BER encoding algorithm:

① **Between the values L and R of the current pixel, select the smaller and bigger values *Vmax* and *Vmin*.**

② **Modify these two values to have a difference $D=(Vmax'-Vmin')$ as multiple of *B*.**

③ **If the difference *Vmax'-Vmin'* is higher than the maximal available difference ($\Sigma$ of specific values$=SPE_{max}$) replace *Vmax* by Vmax"$=Vmin+SPE_{max}$.**

④ **Encode the new maximal value *Vmax"* as a standard video value without taking into account the BER concept.**

⑤ **Check that the sum of all common values from *Vmax"* is smaller than *Vmin'*. If it is not the case, replace the common value from *Vmax"* by the common values needed to encode *Vmin'*. These common values will be used for the encoding of all values. This code will be called COM_PART since it corresponds to the code based on common sub-fields only.**

⑥ **Encode the two values *Vmax"* and *Vmin'* taking into account this common part COM_PART.**

Now this algorithm shall be illustrated with the help of some examples based on the coding presented before:

➢ Weights of the specific sub-fields for the right eye: 5 - 10 - 20 - 40 - 50 - 70 ($\Sigma$ = 195)
➢ Weights of the specific sub-fields for the left eye: 5 - 10 - 20 - 40 - 50 - 70 ($\Sigma$ = 195)
➢ Weights of the common sub-fields for both eyes: 1 - 2 - 4 - 8 - 15 - 30 ($\Sigma$ = 60)
$SPE_{max}$ = 195 and *B* = 5.

1. (L) = 52 and (R) = 128

① *Vmax=128* and *Vmin=52*.
② *Vmax'=127* and *Vmin'=52* with a difference $D=(Vmax'-Vmin')$ =75=5x15.
③ Nothing to do since Vmax'-Vmin'=75$\leq$195 (SPE$_{max}$).
④ 127 = 1 + 2 + 4 + 5 + 10 + 15 + 20 + 30 + 40
⑤ COM_PART = 1 + 2 + 4 + 15 + 30 = 52. In this example, COMP_PART (52) $\leq$ Vmin'(52)
⑥ Encoding of all values:

➢ 52 ➢ 1 + 2 + 4 + 15 + 30 = 52 [no error]
➢ 128 ➢ 1 + 2 + 4 + 5 + 10 + 15 + 20 + 30 + 40 = 127 [error=1]

⑦ Displaying: 0 | 1 + 2 + 4 + 15 + 30 | 5 + 10 + 20 + 40

2. (L) = 243 and (R) = 7

① *Vmax=243* and *Vmin=7.*
② *Vmax'=242* and *Vmin'=7* with a difference $D=(Vmax'-Vmin')$ =235=5x47.
③ Vmin'=Vmin=7 and Vmax" = 7 + 195 = 202 since Vmax'-Vmin'=235 > 195 (SPE$_{max}$).
④ 202 = 4 + 5 + 8 + 10 + 15 + 20 + 30 + 40 + 70
⑤ COM_PART = 4 + 8 + 15 + 30 = 57. In this example, COM_PART (57) > Vmin' (7). Encode Vmin' = 1 + 2 + 4 with COM_PART = 7
⑥ Encoding of all values with COM_PART from Vmin':

➢ 7 $\Rightarrow$ 1 + 2 + 4 = 7 [no error]
➢ 243 $\Rightarrow$ 1 + 2 + 4 + 5 + 10 + 20 + 40 + 50 + 70 = 202 [error=41]

⑦ Displaying: 5 + 10 + 20 + 40 + 50 + 70 | 1 + 2 + 4 | 0

3. (L) = 86 and (R) = 128

① *Vmax=128* and *Vmin=86.*
② *Vmax'=127* and *Vmin'=87* with a difference $D=(Vmax'-Vmin')$ =40=5x8.
③ Nothing to do since Vmax'-Vmin'=40$\leq$195 (SPE$_{max}$).
④ 127 = 1 + 2 + 4 + 5 + 10 + 15 + 20 + 30 + 40
⑤ COM_PART = 1 + 2 + 4 + 15 + 30 = 52. In this example, COMP_PART (52) $\leq$ Vmin'(87)
⑥ Encoding of all values with COM_PART from Vmin':

➢ 86 $\Rightarrow$ 1 + 2 + 4 + 5 + 10 + 15 + 20 + 30= 87 [error=1]
128 $\Rightarrow$ 1 + 2 + 4 + 5 + 10 + 15 + 20 + 30 + 40 = 127 [error=1]

⑦ Displaying: 5 + 10 + 20 | 1 + 2 + 4 + 15 + 30| 5 + 10 + 20 + 40

Another artifact introduced by the stereoscopic "sequential-fields" method is the so-called parallax effect. Assuming the implementation of a "sequential-fields" method which will, first show the picture for the left eye (L), and then the picture for the right eye (R). Assuming further that an object is moving from the right to the left. The human brain expects that the right eye will see the object first. This is not the case in the event of the "sequential-fields" method with (L) first and (R) later. This inconsistency in the time domain of the stereoscopic picture sent to the human visual system will disturb the viewer and makes the stereoscopic scene less pleasant. The same effect will happen with the two principles presented above. This effect can be slightly reduced by the use of a third group of sub-fields (common one) located between the two specific groups displayed for the two eyes as in the principle presented above. Nevertheless, the artifact stays visible as long as the sub-fields related to the two pictures stay grouped.

A possible solution to avoid this artifact is depending on the shutter eyeglasses speed. Assuming that the shutter glasses are able to switch in a time frame which does not exceed the panel addressing time with a good transparency (the transparency often depends on the switch frequency), then it is possible to mix the different type of sub-fields to avoid the time parallax effect.

A possible mixing in the case of the BER can be made as following:

1 - 2 - 4 - **5** - *5* - 8 - **10** - 10 - 15 - **20** - *20* - 30 - **40** - *40* - **50** - *50* - **70** - *70*

In this sub-fields organization, the **bold** sub-fields are related to the left eye, the *italic* sub-fields are related to the right eye and the underlined sub-fields are related to the common sub-fields. All these sub-fields are mixed together. Obviously, this can be also performed on the standard "sequential-field" method without the use of a common part. In addition, the sub-fields organization can be changed from one frame to another in order to increase this artifact reduction.

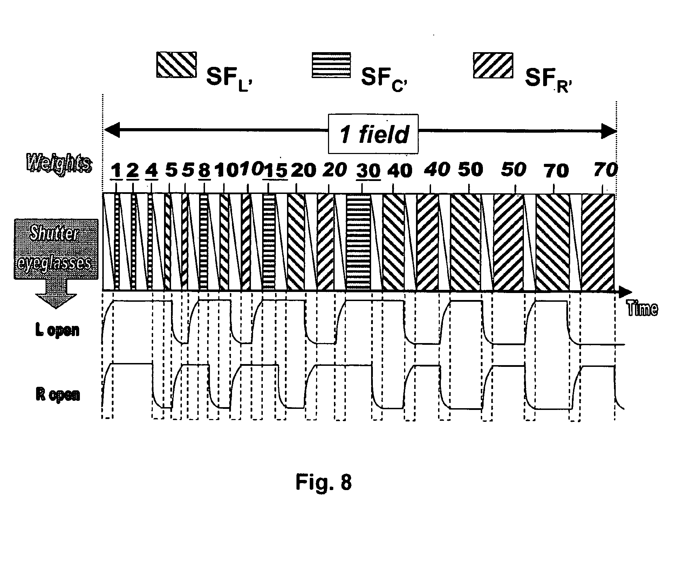

Fig. 8 illustrates the principle of time parallax reduction by sub-field interleaving. It shows the interleaving of the different sub-fields for each Right, Left and Common sub-field group. The described displaying protocol will lead to a reduction of the time-parallax artifacts but this will need a good synchronization of the open and close states for each eyeglass with the lighting period of each sub-field. In addition, the switching frequency of the glasses is higher and optimal glasses have to be found to avoid a strong loss of picture luminance performance.

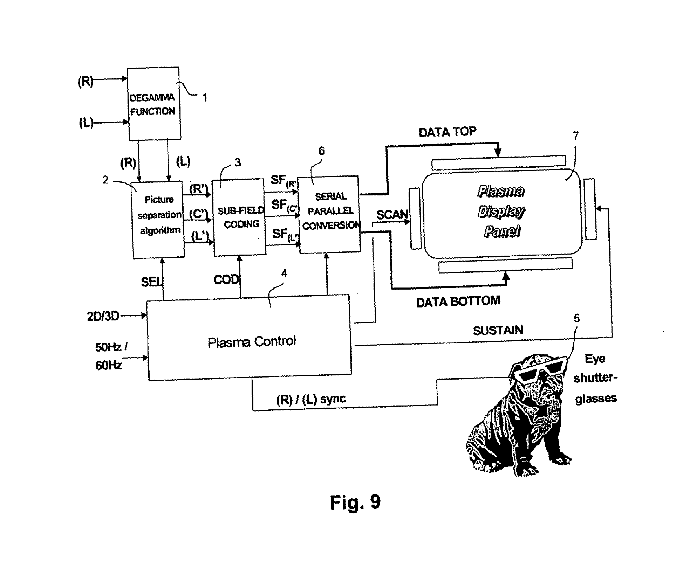

Fig. 9 describes a possible circuit implementation of the picture separation algorithm described above.

Input Right (R) and Left (L) pictures are forwarded to a degamma function block 1. The output of this block 1 is forwarded to a picture separation algorithm 2 which generates three pictures L', C' and R' which are forwarded sent to a sub-field encoder 3 to obtain three groups of sub-fields $SF_{(R')}$, $SF_{(C')}$ and $SF_{(L')}$. A plasma control unit 4, depending on the defined mode (2D or 3D activated, 50Hz or 60Hz mode) activates or deactivates the picture separation algorithm 2 with a signal SEL and selects the correct sub-fields encoding algorithm with a signal COD. This block generates all the plasma control signals priming, scan, sustain and erase and, furthermore, it generates all needed synchronization signals for the shutter eyeglasses 5.

The codes for sub-fields $SF_{(R')}$, $SF_{(L')}$ and $SF_{(C')}$ are input one after the other to a signal-parallel conversion unit 6, where the signals DATA TOP and DATA BOTTOM are generated for the top and bottom drivers of a plasma display panel 7.

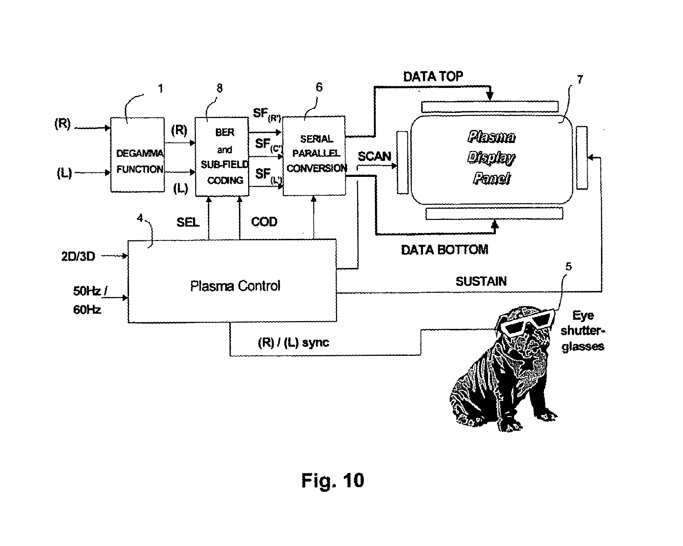

Fig. 10 describes a possible circuit implementation of the BER algorithm also described above. Input Right (R) and Left (L) pictures are forwarded to the degamma function block 1. The output of this block 1 is forwarded to the sub-field encoder 8 to obtain three groups of sub-fields SF(R'), SF(C') and SF(L'). This sub-fields encoder 8 also contains the BER algorithm part. The plasma control 4, depending on the defined mode (2D or 3D activated, 50Hz or 60Hz mode) activates or deactivates the BER algorithm with the signal SEL and selects the correct sub-fields encoding algorithm with the signal COD. This block 4 also generates all the plasma control signals and, furthermore, it generates all needed synchronisation signals for the shutter eyeglasses 5. Further units correspond to those of Fig. 9.

Thus, the advantages of present inventions are that the panel luminance in case of 3D stereoscopic displaying is improved, time parallax artifacts in case of stereoscopic displaying are reduced and the presented algorithms are very simple and therefore they do not request too much resources on chip (memory, computations...) . Only a slight adaptation of the plasma driving electronic should be necessary.

The principles of the present invention are applicable to each kind of display dedicated to stereoscopic displaying and using a similar way of grey level rendition method like DMD, LCOS, ...

**Claims**

1. Method for processing stereoscopic video pictures for stereoscopic display on a display device having a plurality of luminous elements, one or more of them corresponding to each of the pixels of a video picture, wherein each stereoscopic video picture includes an original left picture (L) and an original right picture (R), and wherein the time duration of a video frame/field of a stereoscopic video picture is divided into a plurality of sub-fields during which the luminous elements can be activated for light emission in small pulses corresponding to a sub-field code word which is used for brightness control, **characterized by the steps** of determining a number of sub-fields called common sub-fields (SFC') for generating light to be seen by both eyes, determining a number of sub-fields called specific left sub-fields. (SFL') for generating light to be seen by the left eyes, determining a number of sub-fields called specific right sub-fields (SFR') for generating light to be seen by the right eye, extracting from pairs of corresponding pixels in the original left picture (L) and the original right picture (R) a common part of the video value pairs, and determining sub-field code words for display driving, where the common part will be coded with the common sub-fields (SFC'), the specific left part coded with the specific left sub-fields (SFL') and the specific right part coded with the specific right sub-fields (SFR'), wherein the sub-field code word for corresponding pixels of the original left picture (L) and the original right picture (R) has identical entries for the common sub-fields (SFC') and individual entries for the specific left sub-fields (SFL') and the specific right sub-fields (SFR').

2. Method according to claim 1, wherein for determining sub-field code words which have identical entries for the common sub-fields the following steps are performed:

   - first a standard encoding of the greater pixel value is performed;
   - then it is checked whether the code word entries for the common sub-fields can also be used for encoding the smaller pixel value;

   if yes, the smaller pixel value is encoded with the same entries for the common sub-fields as in the code word for the greater pixel value,
   if not, those entries for the common sub-fields in the code word of the smaller pixel value which are identical with the entries in the code word of the greater pixel value are used to revise the coding of the greater pixel value.

3. Method according to claim 1 or 2, wherein the sub-fields (SFL',SFC',SFR') of the first, second and third sub-field group, are arranged within one frame/field of the stereoscopic video picture in an interleaved manner for time parallax reduction.

4. Device for processing stereoscopic video pictures for stereoscopic display on display means (7) having a plurality of luminous elements, one or more of them corresponding to each of the pixels of a video picture, wherein each stereoscopic video picture includes an original left picture (L) and an original right picture (R), and wherein the time duration of a video frame/field corresponding to each stereoscopic video picture is divided into a plurality of sub-fields during which the luminous elements can be activated for light emission in small pulses corresponding to a sub-field code word which is used for brightness control, **characterized by** a number of sub-fields called common sub-fields (SFC') for generating light to be seen by both eyes, a number of sub-fields called specific left sub-fields (SFL') for generating light to be seen by the left eyes, a number of sub-fields called specific right sub-fields (SFR') for generating light to be seen by the right eye, means for extracting from pairs of corresponding pixels in the original left picture (L) and the original right picture (R) a common part of the video value pairs, and determining sub-field code words for display driving, where the common part will be coded with the common sub-fields (SFC'), the specific left part coded with the specific left sub-fields (SFL') and the specific right part coded with the specific right sub-fields (SFR'), wherein the sub-field code word for corresponding pixels of the original left picture (L) and the original right picture (R) has identical entries in the common sub-fields (SFC') and individual entries for the specific left sub-fields (SFL') and the specific right sub-fields (SFR').

5. Device according to claim 4, further including serial-parallel conversion means (6) for arranging the sub-fields (SFL',SFC',SFR') of the first, second and third sub-field group within one frame/field period of the stereoscopic video picture in an interleaved manner for time parallax reduction.

6. Device according to claim 4 or 5, further including control means (4), for generating control signals for the shutter eyeglasses so that the opening periods of the shutters for both eyes overlap in one or more periods in which the light generation is made with the second group of sub-fields (SFC').

**Patentansprüche**

1. Verfahren zur Verarbeitung stereoskopischer Videobilder zur stereoskopischen Anzeige auf einer Anzeigevorrichtung, die eine Mehrzahl von Leuchtelementen aufweist, von denen eines oder mehrere jeweils einem der Pixel eines Videobildes entsprechen, wobei jedes stereoskopische Videobild ein ursprüngliches linkes Bild (L) und ein ursprüngliches rechtes Bild (R) enthält, und wobei die Zeitdauer eines stereoskopischen Video-Vollbildes/Halbbildes in eine Mehrzahl von Unterfeldern unterteilt wird, während denen die Leuchtelemente für eine Lichtaussendung in kleinen Impulsen entsprechend einem Unterfeld-Kodewort aktiviert werden können, das zur Helligkeitssteuerung verwendet wird, **gekennzeichnet durch** die Schritte:

   Bestimmen einer Anzahl von Unterfeldern, die als gemeinsame Unterfelder (SFC') bezeichnet werden, um von beiden Augen zu sehendes Licht zu erzeugen, Bestimmen einer Anzahl von Unterfeldern, die als spezifische linke Unterfelder (SFL') bezeichnet werden, um von dem linken Auge zu sehendes Licht zu erzeugen, Bestimmen einer Anzahl von Unterfeldern, die als spezifische rechte Unterfelder (SFR') bezeichnet werden, um von dem rechten Auge zu sehendes Licht zu erzeugen, Herausziehen eines gemeinsamen Teils der Videowert-Paare aus Paaren von entsprechenden Pixeln in dem ursprünglichen linken Bild (L) und dem ursprünglichen rechten Bild (R), und Bestimmen von Unterfeld-Kodeworten zur Anzeige-Ansteuerung, wobei der gemeinsame Teil mit den gemeinsamen Unterfeldern (SFC'), der spezifische linke Teil mit den spezifischen linken Unterfeldern (SFL') und der spezifische rechte Teil mit den spezifischen rechten Unterfeldern (SFR') kodiert wird, wobei das Unterfeld-Kodewort für entsprechende Pixel des ursprünglichen linken Bildes (L) und des ursprünglichen rechten Bildes (R) identische Einträge für die gemeinsamen Unterfelder (SFC') und individuelle Einträge für die spezifischen linken Unterfelder (SFL') und die spezifischen rechten Unterfelder (SFR') hat.

2. Verfahren nach Anspruch 1, bei dem zur Bestimmung von Unterfeld-Kodeworten, die identische Einträge für die gemeinsamen Unterfelder haben, die folgenden Schritte ausgeführt werden:

 - zuerst wird eine Standard-Kodierung des größeren Pixelwertes ausgeführt;
 - dann wird geprüft, ob die Kodewort-Einträge für die gemeinsamen Unterfelder auch zur Kodierung des kleineren Pixelwertes verwendet werden können;
 falls ja, wird der kleinere Pixelwert mit denselben Einträgen für die gemeinsamen Unterfelder kodiert wie in dem Kodewort für den größeren Pixelwert;
 wenn nicht, werden jene Einträge für die gemeinsamen Unterfelder in dem Kodewort des kleineren Pixelwertes, die identisch mit den Einträgen in dem
 Kodewort des größeren Pixelwertes sind, dazu benutzt, die Kodierung des größeren Pixelwertes zu revidieren.

3. Verfahren nach Anspruch 1 oder 2, bei dem die Unterfelder (SFL', SFC', SFR') der ersten, zweiten und dritten Unterfeldgruppe innerhalb eines Vollbildes/Halbbildes des stereoskopischen Videobildes in einer verschachtelten Weise zur Verminderung von Zeitparallaxe angeordnet werden.

4. Vorrichtung zur Verarbeitung stereoskopischer Videobilder zur stereoskopischen Anzeige auf Anzeigemitteln (7), die eine Mehrzahl von Leuchtelementen aufweisen, von denen eines oder mehrere jeweils einem der Pixel eines Videobildes entsprechen, wobei jedes stereoskopische Videobild ein ursprüngliches linkes Bild (L) und ein ursprüngliches rechtes Bild (R) enthält, und wobei die Zeitdauer eines Video-Vollbildes/Halbbildes entsprechend jedem stereoskopischen Videobild in eine Mehrzahl von Unterfeldern unterteilt ist, während denen die Leuchtelemente für eine Lichtaussendung in kleinen Impulsen entsprechend einem Unterfeld-Kodewort aktiviert werden können, das zur Helligkeitssteuerung verwendet wird, **gekennzeichnet durch** eine Anzahl von Unterfeldern, die als gemeinsame Unterfelder (SFC') bezeichnet werden, um von beiden Augen zu sehendes Licht zu erzeugen, eine Anzahl von Unterfeldern, die als spezifische linke Unterfelder (SFL') bezeichnet werden, um von dem linken Auge zu sehendes Licht zu erzeugen, eine Anzahl von Unterfeldern, die als spezifische rechte Unterfelder (SFR') bezeichnet werden, um von dem rechten Auge zu sehendes Licht zu erzeugen, Mittel zum Herausziehen eines gemeinsamen Teils der Videowert-Paare aus Paaren von entsprechenden Pixeln in dem ursprünglichen linken Bild (L) und dem ursprünglichen rechten Bild (R), und Bestimmen von Unterfeld-Kodeworten zur Anzeige-Ansteuerung, wobei der gemeinsame Teil mit den gemeinsamen Unterfeldern (SFC'), der spezifische linke Teil mit den spezifischen linken Unterfeldern (SFL'), und der spezifische rechte Teil mit den spezifischen rechten Unterfeldern (SFR') kodiert wird, und wobei das Unterfeld-Kodewort für entsprechende Pixel des ursprünglichen linken Bildes (L) und des ursprünglichen rechten Bildes (R) identische Einträge in den gemeinsamen Unterfeldern (SFC') und individuelle Einträge für die spezifischen linken Unterfelder (SFL') und die spezifischen rechten Unterfelder (SFR') hat.

5. Vorrichtung nach Anspruch 4, die ferner serielleparallele Umwandlungsmittel (6) enthält, um die Unterfelder (SFL', SFC', SFR') der ersten, zweiten und dritten Unterfeldgruppe innerhalb einer Vollbild/Halbbild-Periode des stereoskopischen Videobildes in einer verschachtelten Weise zur Verminderung von Zeitparallaxe anzuordnen.

6. Vorrichtung nach Anspruch 4 oder 5, die ferner Steuermittel (4) enthält, um Steuersignale für die Verschlussbrille (shutter eyeglasses) zu erzeugen, so dass die Öffnungsperioden der Verschlüsse für beide Augen sich in einer oder mehreren Perioden überlappen, in denen die Lichterzeugung mit der zweiten Gruppe von Unterfeldern (SFC') erfolgt.

**Revendications**

1. Procédé de traitement d'images vidéo stéréoscopiques destinées à un affichage stéréoscopique sur un appareil d'affichage doté d'une pluralité d'éléments lumineux, un ou plusieurs d'entre eux correspondant à chacun des pixels d'une image vidéo, où chaque image vidéo stéréoscopique inclut une image gauche initiale (L) et une image droite initiale (R) et où la durée d'une trame/d'un champ vidéo d'une image vidéo stéréoscopique est divisé(e) en une pluralité de sous-champs pendant lesquels les éléments lumineux peuvent être activés pour une émission de lumière par petites impulsions correspondant à un mot de code de sous-champ utilisé pour le contrôle de la luminosité, **caractérisé par les étapes consistant à** déterminer un certain nombre de sous-champs appelés sous-champs communs (SFC') pour générer de la lumière devant être perçue par les deux yeux, déterminer un certain nombre de sous-champs appelés sous-champs gauches spécifiques (SFL') pour générer de la lumière devant être perçue par l'oeil gauche, déterminer un certain nombre de sous-champs appelés sous-champs droits spécifiques (SFR') pour générer de la lumière devant être perçue par l'oeil droit, extraire, à partir de paires de pixels correspondants dans l'image gauche initiale (L) et l'image droite initiale (R) une partie commune des paires de valeurs vidéo et déterminer des mots de code de sous-champ pour le pilotage de l'affichage, où la partie commune sera codée avec les sous-champs communs (SFC'), la partie gauche spécifique codée avec les sous-champs gauches spécifiques (SFL') et la partie droite spécifique codée avec les sous-champs droits spécifiques (SFR'), où le mot de code de sous-champ pour les pixels correspondants de l'image gauche initiale (L) et l'image droite initiale (R) possède des entrées identiques pour les sous-champs communs (SFC') et des entrées individuelles pour les sous-champs gauches spécifiques (SFL') et les sous-champs droits spécifiques (SFR').

2. Procédé selon la revendication 1, où, pour déterminer des mots de code de sous-champ qui ont des entrées identiques pour les sous-champs communs, les étapes suivantes sont réalisées :

   - tout d'abord, un codage standard de la valeur de pixel la plus élevée est réalisé ;
   - ensuite, il est vérifié si les entrées de mot de code pour les sous-champs communs peuvent également être utilisées pour coder la valeur de pixel la plus faible ;

   si c'est le cas, la valeur de pixel la plus faible est codée avec les mêmes entrées pour les sous-champs communs comme dans le mot de code pour la valeur de pixel la plus élevée,
   si ce n'est pas le cas, ces entrées pour les sous-champs communs dans le mot de code de la valeur de pixel la plus faible, qui sont identiques aux entrées du mot de code de la valeur de pixel la plus élevée, sont utilisées pour réviser le codage de la valeur de pixel la plus élevée.

3. Procédé selon la revendication 1 ou 2, où les sous-champs (SFL', SFC', SFR') du premier, du deuxième et du troisième groupe de sous-champs sont disposés au sein d'une trame/d'un champ de l'image vidéo stéréoscopique de manière entrelacée pour une réduction parallaxe de temps.

4. Dispositif de traitement d'images vidéo stéréoscopiques destinées à un affichage stéréoscopique sur un moyen d'affichage (7) doté d'une pluralité d'éléments lumineux, un ou plusieurs d'entre eux correspondant à chacun des pixels d'une image vidéo, où chaque image vidéo stéréoscopique inclut une image gauche initiale (L) et une image droite initiale (R) et où la durée d'une trame/d'un champ vidéo correspondant à chaque image vidéo stéréoscopique est divisé(e) en une pluralité de sous-champs pendant lesquels les éléments lumineux peuvent être activés pour une émission de lumière par petites impulsions correspondant à un mot de code de sous-champ utilisé pour le contrôle de la luminosité, **caractérisé par** un certain nombre de sous-champs appelés sous-champs communs (SFC') pour générer de la lumière devant être perçue par les deux yeux, un certain nombre de sous-champs appelés sous-champs gauches spécifiques (SFL') pour générer de la lumière devant être perçue par l'oeil gauche, un certain nombre de sous-champs appelés sous-champs droits spécifiques (SFR') pour générer de la lumière devant être perçue par l'oeil droit, un moyen permettant d'extraire, à partir de paires de pixels correspondants dans l'image gauche initiale (L) et l'image droite initiale (R) une partie commune des paires de valeurs vidéo et de déterminer des mots de code de sous-champ pour le pilotage de l'affichage, où la partie commune sera codée avec les sous-champs communs (SFC'), la partie gauche spécifique codée avec les sous-champs gauches spécifiques (SFL') et la partie droite spécifique codée avec les sous-champs droits spécifiques (SFR'), où le mot de code de sous-champ pour les pixels correspondants de l'image gauche initiale (L) et l'image droite initiale (R) possède des entrées identiques dans les sous-champs communs (SFC') et des entrées individuelles pour les sous-champs gauches spécifiques (SFL') et les sous-champs droits spécifiques (SFR').

5. Procédé selon la revendication 4, incluant en outre un moyen de conversion série-parallèle (6) permettant d'agencer les sous-champs (SFL', SFC', SFR') du premier, du deuxième et du troisième groupe de sous-champs au sein d'une période de trame/champ de l'image vidéo stéréoscopique de manière entrelacée pour une réduction parallaxe de temps.

6. Dispositif selon la revendication 4 ou 5, incluant en outre un moyen de commande (4), permettant de générer des signaux de commande pour les lunettes à obturation, de façon à ce que les périodes d'ouverture des obturateurs pour les deux yeux se chevauchent en une ou plusieurs périodes au cours desquelles la génération de lumière a lieu avec le deuxième groupe de sous-champs (SFC').

Natural scene

Human eyes

Pictures located in the human cortex

Stereoscopic 3D interpretation

**Fig. 1**

**Fig. 2**

**Fig. 3**

**Fig. 4**

**Fig. 5**

EP 1 231 589 B1

**Fig. 6**

16

**Fig. 7**

**Fig. 8**

**Fig. 9**

**Fig. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1058229 A